Europäisches Patentamt

European Patent Office

Office européen des brevets

(11) Veröffentlichungsnummer: **0 610 749 A1**

# (12) EUROPÄISCHE PATENTANMELDUNG

(21) Anmeldenummer: **94101270.0**

(22) Anmeldetag: **28.01.94**

(51) Int. Cl.5: **C01B 7/19**

(30) Priorität: **10.02.93 DE 4303836**

(43) Veröffentlichungstag der Anmeldung:
**17.08.94 Patentblatt 94/33**

(84) Benannte Vertragsstaaten:
**BE DE ES FR GB IT NL**

(71) Anmelder: **BAYER AG**

**D-51368 Leverkusen (DE)**

(72) Erfinder: **Bulan, Andreas, Dipl.-Ing.**
**Alt Langenfeld 15**
**D-40764 Langenfeld (DE)**
Erfinder: **Weber, Rainer, Dr.**
**Forststrasse 15a**
**D-51519 Odenthal (DE)**
Erfinder: **Klaeren, Aloys, Dr.**
**Bärenstrasse 12**
**D-47802 Krefeld (DE)**
Erfinder: **Moretto, Hans-Heinrich, Dr.**
**Sürderstrasse 50**
**D-51375 Leverkusen (DE)**

(54) **Verfahren zur Reinigung von Fluorwasserstoff.**

(57) Die Erfindung betrifft ein Verfahren zur Reinigung von wasserfreiem, technischem Fluorwasserstoff durch Elektrolyse unter Aufrechterhaltung einer Wasserkonzentration von mindestens 200 ppm im Elektrolyten.

EP 0 610 749 A1

Die Erfindung betrifft ein Verfahren zur Reinigung von wasserfreiem, technischem Fluorwasserstoff durch Elektrolyse.

Fluorwasserstoff fällt bei seiner technischen Herstellung ($CaF_2$ + $H_2SO_4$ → 2 HF + $CaSO_4$) im allgemeinen als wasserfreier Fluorwasserstoff an, der in Abhängigkeit vom Ausgangsmaterial (normalerweise Flußspat) einige Verunreinigungen sowie Wasser in geringen Mengen enthält.

Unter wasserfreiem Fluorwasserstoff wird ein solcher Fluorwasserstoff verstanden, wie er mit einem üblichen technischen Verfahren erhalten wird und der einen Wassergehalt von unter 5000 mg Wasser/kg Fluorwasserstoff aufweist.

Die Verunreinigungen sind im wesentlichen Verbindungen der Elemente Arsen, Phosphor, Bor, Silicium und Schwefel.

Diese Verbindungen sind bei vielen Anwendungen unerwünscht, da sie störende Einflüsse haben.

Beim Einsatz von wäßrigen Lösungen des Fluorwasserstoffes bei der Herstellung von elektronischen Bauteilen wirken besondes die Verbindungen der Elemente Arsen, Phosphor, Silicium und Bar störend.

Bei Anwendungen, bei denen Fluorwasserstoff und ein Katalysator eingesetzt werden, wie z.B. bei der Herstellung von Fluor-Kohlenwasserstoffen, den Ersatzstoffen der Fluor-Chlor-Kohlenwasserstoffe, stören besonders die Verbindungen des Schwefels.

Die Reinigung von wasserfreiem, technischem Fluorwasserstoff durch Elektrolyse wird in DE-A 4 031 967 und in WO 91/13024 beschrieben. Bei beiden Verfahren werden die Verunreinigungen durch Elektrolyse unter Verwendung von Nickel- oder Kohlenstoffelektroden aus dem Fluorwasserstoff entfernt.

Beim Einsatz von Nickelelektroden wird eine hohe Elektrodenkorrosion während der Elektrolyse beobachtet. Die entstehenden Korrosionsprodukte führen zu Verstopfungen der Elektrodenzwischenräume sowie von Rohrleitungen und Ventilen, was Probleme bei der technischen Durchführung der Verfahren gibt.

Kohlenstoff-Elektroden haben sich als nicht besonders geeignet herausgestellt, da sie kurze Standzeiten bei der Elektrolyse in wasserfreiem, technischem Fluorwasserstoff aufweisen.

Aufgabe der Erfindung war es daher, ein Verfahren zur Reinigung von technischem, wasserfreiem Fluorwasserstoff zur Verfügung zu stellen, das die genannten Nachteile nicht aufweist und die Reinigung nicht gleichzeitig verkompliziert.

Diese Aufgabe konnte mit dem erfindungsgemäßen Verfahren gelöst werden.

Gegenstand der Erfindung ist ein Verfahren zur Reinigung von technischem, wasserfreiem Fluorwasserstoff durch Elektrolyse, welches dadurch gekennzeichnet ist, daß eine Konzentration von Wasser im Elektrolyten von mindestens 200 mg Wasser/kg Fluorwasserstoff während der Elektrolyse aufrecht erhalten wird.

Das erfindungsgemäße Verfahren wird so durchgeführt, daß dem Elektrolyten Wasser oder eine wäßrige Lösung von Fluorwasserstoff vor oder während der Elektrolyse zugegeben wird, um so den geforderten Wassergehalt aufrecht zu erhalten, falls der eingesetzte Fluorwasserstoff nicht genügend Wasser enthält bzw. während der Elektrolyse zu viel Wasser verbraucht wird. Besonders bevorzugt wird so viel Wasser zugegeben, wie durch die Elektrolyse verbraucht wird, solange die Konzentration im Elektrolyten mindestens 200 mg $H_2O$/kg HF beträgt.

Das im Fluorwasserstoff vorhandene und das zugesetzte Wasser wird während der Elektrolyse zu Sauerstoff, Sauerstoffdifluorid und Wasserstoff umgesetzt, wobei folgende Reaktionsgleichungen zugrunde liegen:

Gleichung I:

$$2\ H_2O \xrightarrow{107,2\ Ah} 2\ H_2 + O_2$$

Gleichung II:

$$H_2O + 2\ HF \xrightarrow{107,2\ Ah} OF_2 + 2\ H_2$$

Wird mehr Wasser zugegeben als verbraucht wird, so muß die Elektrolyse gemäß den Gleichungen I und II länger betrieben werden, um eine gewünschte niedrige Konzentration an Wasser zu erhalten. Alternativ dazu kann überschüssiges Wasser durch Destillation abgetrennt werden.

Das Wasser oder die wäßrige Lösung von Fluorwasserstoff kann während der Elektrolyse kontinuierlich oder diskontinuierlich zugegeben werden.

Wird die Elektrolyse zur Reinigung von technischem Fluorwasserstoff nach dem Stand der Technik, also nicht unter Einhaltung einer bestimmten Wasserkonzentration im Elektrolyten durchgeführt, so wird die Wasserkonzentration im zu reinigenden, technischen Fluorwasserstoff bis auf Null abnehmen, und eine starke Elektrodenkorrosion setzt ein.

Es ist besonders vorteilhaft, die Elektrolyse so durchzuführen, daß für eine Ladungsmenge von 107,2 Ah zwischen 5 und 36 g Wasser dem Elektrolyten zugegeben wird.

Bei der Durchführung des erfindungsgemäßen Verfahrens zur Reinigung von wasserfreiem, technischem Fluorwasserstoff wird eine deutlich niedrigere Elektrodenkorrosion als bei Verfahren gemäß dem Stand der Technik erhalten.

Das erfindungsgemäße Verfahren soll anhand der folgenden Beispiele näher erläutert werden.

Beispiel 1

(Stand der Technik gemäß DE 4 031 967)

Für die Durchführung des Verfahrens gemäß DE 4 031 967 wurde ein wasserfreier, technischer Fluorwasserstoff eingesetzt, der 300 mg Wasser pro kg Fluorwasserstoff enthielt. Eine Elektolysezelle mit einem Volumen von 650 ml und einem Elektrodenpaket bestehend aus 4 Nickelblech-Anoden (70 * 50 * 2 mm) und 5 Nickelblech-Kathoden (70 * 50 * 2 mm), wobei die Elektroden alternierend zueinander angeordnet waren, wurde mit dem zu reinigenden Fluorwasserstoff gefüllt. Der Fluorwasserstoff enthielt z.B. 27 mg Arsen/kg Fluorwasserstoff als Verunreinigung.

Ein Strom von 1 Ampere wurde am Gleichrichter bei 4,8 V eingestellt. Dies entsprach einer Stromdichte von 3,69 mA/cm$^2$. Die Stromdichte konnte durch stetige Erhöhung der Elektrolysespannung konstant gehalten werden. Die Elektrolysespannung stieg von anfangs 4,8 V auf 6,7 V bei Versuchsende an. Nach einer geflossenen Ladungsmenge von 4 Ah wurde der Versuch abgebrochen.

Der Zelleninhalt wurde analysiert. Der in der Zelle befindliche Fluorwasserstoff enthielt weniger als 0,02 mg Arsen/kg Fluorwasserstoff. Es wurden mehr als 99,9 % des Arsens entfernt.

Die Elektrodenkorrosion lag bei 225 mg Nickelverlust pro Amperestunde.

Beispiel 2

(erfindungsgemäßes Verfahren)

Für die Durchführung des erfindungsgemäßen Verfahrens wurde ein Fluorwasserstoff eingesetzt, der 300 mg Wasser pro kg Fluorwasserstoff enthielt. Eine Elektolysezelle mit einem Volumen von 650 ml und einem Elektrodenpaket bestehend aus 4 Nickelblech-Anoden (70 * 50 * 2 mm) und 5 Nickelblech-Kathoden (70 * 50 * 2 mm), wobei die Elektroden alternierend zueinander angeordnet waren, wurde mit dem zu reinigenden Fluorwasserstoff gefüllt. Der Fluorwasserstoff enthielt 25 mg Arsen/kg Fluorwasserstoff als Verunreinigung.

Ein Strom von 1 Ampere wurde am Gleichrichter bei 4,65 V eingestellt. Dies entsprach einer Stromdichte von 3,69 mA/cm$^2$. Während der Elektrolyse wurden insgesamt 800 mg Wasser kontinuierlich zugegeben, so daß die Konzentration an Wasser im Elektrolyten 300 mg $H_2O$ betrug. Nach einer geflossenen Ladungsmenge von 4 Ah wurde der Versuch abgebrochen.

Der Zelleninhalt wurde analysiert. Der in der Zelle befindliche Fluorwasserstoff enthielt weniger als 0,02 mg Arsen/kg Fluorwasserstoff. Es wurden mehr als 99,9 % des Arsens entfernt.

Es wurde keine Elektrodenkorrosion beobachtet.

**Patentansprüche**

1. Verfahren zur Reinigung von wasserfreiem, technischem Fluorwasserstoff durch Elektrolyse, dadurch gekennzeichnet, daß eine Konzentration von Wasser im Elektrolyten von mindestens 200 mg Wasser/kg Fluorwasserstoff während der Elektrolyse aufrecht erhalten wird.

2. Verfahren gemäß Anspruch 1, dadurch gekennzeichnet, daß die Konzentration durch Zugabe von Wasser oder einer wäßrigen Lösung von Fluorwasserstoff vor oder während der Elektrolyse aufrecht erhalten wird.

3. Verfahren gemäß Anspruch 2, dadurch gekennzeichnet, daß für eine Ladungsmenge von 107,2 Amperestunden zwischen 5 und 36 g Wasser dem Elektrolyten zugegeben werden.

<br>

| Europäisches Patentamt | **EUROPÄISCHER RECHERCHENBERICHT** | Nummer der Anmeldung EP 94 10 1270 |
|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| D,Y | EP-A-0 480 254 (BAYER AG)<br>* Seite 2, Zeile 30 - Zeile 54 *<br>* Beispiele *<br>* Ansprüche 1-3,6-8 *<br>--- | 1,2 | C01B7/19 |
| Y | JOURNAL OF THE ELECTROCHEMICAL SOCIETY<br>Bd. 115, Nr. 10 , Oktober 1968 ,<br>MANCHESTER, NEW HAMPSHIRE US<br>Seiten 1042 - 1045<br>J.A.DONAHUE ET AL. 'The nickel/nickel fluoride anode in wet hydrogen fluoride'<br>* Seiten 1043, 1044: Results and discussion *<br>--- | 1,2 | |
| A | JOURNAL OF THE ELECTROCHEMICAL SOCIETY<br>Bd. 115, Nr. 10 , Oktober 1968 ,<br>MANCHESTER, NEW HAMPSHIRE US<br>Seiten 1039 - 1042<br>J.A.DONOHUE, A.ZLETZ 'Pulsed electrolysis of wet hydrogen fluoride'<br>* das ganze Dokument *<br>--- | 1,2 | |
| A | ZEITSCHRIFT FUR ANORGANISCHE CHEMIE<br>Bd. 463 , 1980 , LEIPZIG DD<br>Seiten 91 - 95<br>D. HASS, P.WOLTER 'Über die Darstellung von OF2 durch Electrolyse wasserhaltiger HF'<br>* das ganze Dokument *<br>--- | 1,2 | **RECHERCHIERTE SACHGEBIETE (Int.Cl.5)**<br><br>C01B |
| D,A | WO-A-91 13024 (E.I. DU PONT DE NEMOURS AND COMPANY)<br>* Seite 5, Zeile 1 - Zeile 30 *<br>* Seite 9, Zeile 6 - Zeile 16 *<br>* Seite 9, Zeile 27 - Zeile 30 *<br>* Beispiele *<br>* Ansprüche 1,2,10,14,15 *<br>----- | 1,2 | |

Der vorliegende Recherchenbericht wurde für alle Patentansprüche erstellt

| Recherchenort | Abschlußdatum der Recherche | Prüfer |
|---|---|---|
| DEN HAAG | 18. Mai 1994 | Van der Poel, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P04C03)